Europäisches Patentamt

European Patent Office

Office européen des brevets

(19)

(11) EP 0 576 661 B1

(12) EUROPÄISCHE PATENTSCHRIFT

(45) Veröffentlichungstag und Bekanntmachung des Hinweises auf die Patenterteilung:
03.09.1997 Patentblatt 1997/36

(21) Anmeldenummer: 93903224.9

(22) Anmeldetag: 22.01.1993

(51) Int Cl.⁶: G05B 5/01, G05B 13/02

(86) Internationale Anmeldenummer:
PCT/EP93/00149

(87) Internationale Veröffentlichungsnummer:
WO 93/15447 (05.08.1993 Gazette 1993/19)

(54) **REGELUNGS-ANORDNUNG**

ADJUSTING ARRANGEMENT

AGENCEMENT DE REGLAGE

(84) Benannte Vertragsstaaten:
CH DE FR GB IT LI

(30) Priorität: 22.01.1992 DE 9200708 U
30.04.1992 DE 4214393

(43) Veröffentlichungstag der Anmeldung:
05.01.1994 Patentblatt 1994/01

(73) Patentinhaber: THE GLEASON WORKS
Rochester New York 14692 (US)

(72) Erfinder:
• HÖCHT, Johannes
D-8052 Moosburg (DE)
• LEICHT, Bernhard
D-8000 München 83 (DE)

(74) Vertreter: Schmidt-Evers, Jürgen, Dipl.-Ing. et al
Patentanwälte
Mitscherlich & Partner,
Postfach 33 06 09
80066 München (DE)

(56) Entgegenhaltungen:
EP-A- 0 229 891          EP-A- 0 250 775
GB-A- 2 043 964

• PROCEEDINGS OF THE 1989 AMERICAN CONTROL CONFERENCE 21. Juni 1989, Pittsburgh, USA, SS 298-303; H. KAZEROONI ET AL: 'THEORY AND EXPERIMENTS ON TRACKING OF THE REPETITIVE SIGNALS'
• PROCEEDINGS OF THE 29TH IEEE CONFERENCE ON DECISION AND CONTROL 5. Dezember 1990, Hawai, USA, SS 1685-1690; K. WATANABE ET AL: 'REPETITIVE CONTROL OF TIME-DELAY SYSTEMS'

## Beschreibung

Die Erfindung betrifft eine Regelungs-Anordnung zur Regelung des Antriebes für ein bewegtes Werkstück oder bewegtes Werkzeug an einer Werkzeugmaschine, bestehend aus einem linearen Regler, linearer Strecke und Rückführzweig.

Regelungs-Anordnungen der hier betrachteten Art werden normalerweise aus zwei Gründen angewendet. Der erste Grund besteht darin, daß der geregelte Antrieb einer sich ändernden Führungsgröße möglichst exakt folgen soll. Es ist bekannt, daß man dieser Forderung bei stationärer Führungsgröße am besten mit einem Integral-Regler nachkommen kann. Dieser hat die Eigenschaft, stationäre, d.h. sprungförmige Änderungen der Führungsgröße ohne bleibende Regelabdifferenz einzuregeln, d.h., er hat Tiefpaßcharakter mit der Grenzfrequenz Null.

Der zweite Grund besteht darin, daß auf der Strecke Störgrößen eingreifen können, die das Regelverhalten der Regelungs-Anordnung störend beeinflussen. Die Regelungs-Anordnung soll so ausgelegt sein, daß sie den Einfluß der Störgrößen möglichst vollständig ausregelt. Auch hier findet wiederum der Integral-Regler die häufigste Anwendung, wenn stationäre, d.h. sprungförmige Störgrößen vollständig ausgeregelt werden sollen.

In industriellen Prozessen sind stationäre Änderungen von Führungs- oder Störgrößen jedoch eher die Ausnahme. Wesentlich häufiger ist der Fall, daß sich Führungs- und Störgrößen kontinuierlich und relativ schnell ändern. Um das Regelverhalten der Regelungs-Anordnung an derartige Änderungen von Führungs- und Störgrößen anzupassen, kann man die Regelverstärkung erhöhen. Dies ist jedoch meistens nur in bestimmten Grenzen möglich. Bei einem Überschreiten der Grenzen kommt es zu Instabilitäten.

Ein besonderer Fall, der hier betrachtet werden soll, sind Führungs- und Störgrößen, die sich periodisch ändern. Gerade spanende Bearbeitungsvorgänge sind nämlich oft periodisch, wie etwa Hobeln, Drehen, Fräsen, Schleifen, Bohren usw. Hierbei sind nicht nur Führungsgrößen periodischer Natur, wie etwa die Änderung der Winkellage eines Drehteiles oder die Änderung der translatorischen Lage eines Fräsers, sondern auch die Störungen, beispielsweise die Spankräfte, treten periodisch auf.

Ein Beispiel für derartige Prozesse ist die Bearbeitung von Schabrädern mit einer Schleifscheibe. Zur Erzeugung der Evolvente wird das Schabrad (Werkstück) periodisch linear bezüglich der Schleifscheibe bewegt und muß gleichzeitig eine periodische hin- und hergehende Drehbewegung um seine Achse durchführen. Die Linearbewegung kann dabei die Führungsgröße für die periodische Hin- und Herbewegung des Schabrades um seine Drehachse sein. Die periodische Drehbewegung und Linearbewegung des Schabrades erfährt jedoch wiederum periodische Störungen, wenn die Schleifscheibe mit dem Schabrad kontaktiert. Die Störgröße hat dabei naturgemäß die gleiche Grundfrequenz, wie die Führungsgröße.

Ein weiteres Beispiel für einen derartigen Prozeß stellt die Bearbeitung von Zahnrädern im kontinuierlichen Abwälzverfahren dar. Das zahnrad- oder schneckenförmige Werkzeug folgt der periodisch wiederkehrenden Lage des zahnradförmigen Werkstückes. Aufgrund der Bearbeitung treten periodische Störungen derselben Grundfrequenz auf.

Liegt im erstgenannten Fall eine Kopplung einer periodischen Linearbewegung mit einer periodischen Drehbewegung vor, so sind im zweitgenannten Fall zwei Drehbewegungen miteinander verkoppelt.

In gleicher Weise sind auch Kopplungen periodischer Linearbewegungen denkbar, wie sie beim Kopierfräsen auftreten können.

Zur vollständigen Einregelung von periodischen Führungsgrößen wird heute üblicherweise eine Vorsteuerung des Folgeregelkreises eingesetzt. Zur vollständigen Ausregelung einer periodischen Störung mit à priori bekannter Frequenz schlug 1971 C.Johnson eine Erweiterung des seit 1960 bekannten Luenberger Beobachters durch ein Störmodell vor (siehe Buch von O.Föllinger "Regelungstechnik", Hüthig-Verlag Heidelberg, 6 Aufl. Seite 519 und Literaturhinweise S.526). Der phasen- und amplitudenrichtig ermittelte Störschätzwert wird nach dieser Methode mit umgekehrtem Vorzeichen der Strecke aufgeschaltet, wie dies auch seit vielen Jahrzehnten mit direkt meßbaren Störungen geschieht ("Störgrößenaufschaltung"). Dieses Verfahren läßt sich vorteilhaft bei der Regelung durch einen digitalen Prozeßrechner einsetzen. Dabei muß für jeden Abtastschritt sowohl das mathematische Abbild der Regelstrecke wie auch der Störung berechnet werden. Dies führt zu einem erheblichen Rechenaufwand, der bei schnellen Vorgängen, wie etwa der Motorregelung, einen heute üblichen Standardmikroprozessor überfordern kann und den Einsatz eines teuren Gleitpunkt-Signalprozessors nötig macht.

In der Veröffendlichung PROCEEDINGS OF THE 1989 AMERICAN CONTROL CONFERENCE, 21 Juin 1989, PITTSBURGH, USA, SEITEN 298-303, H. KAZEROONI ET AL ist ferner die Theorie für eine Regelungs-Anordnung beschrieben, mit der es möglich ist, periodische Störgrößen ohne aufwendigen Störgrößen-Beboachter vollständig oder nahezu vollständig auszuregeln und/oder periodische Führungsgrößen vollständig oder nahezu vollständig einzuregeln. Aus der genannten Veröffentlichung ergibt sich, daß der Regler zum Einregeln einer periodischen Führungsgröße auf der imaginären Achse oder in der eine Schwingungsdämpfung repräsentierenden linken Hälfte der Koordinatenebene der komplexen Veränderlichen mindestens ein konjugiert komplexes Polstellenpaar aufweisen muß, deren durch ihren Abstand vom Nullpunkt des Koordinatensystems definierter Betrag gleich oder annähernd gleich der Periodenfrequenz der Führungsgröße ist und/oder daß der Regler zum Ausregeln einer periodischen Störgröße auf der imaginären Achse oder in der linken Hälfte der Koordinatenebene der komplexen Veränderlichen mindestens ein konjugiert komplexes Polstellenpaar aufweisen muß, deren durch ihren Abstand vom Nullpunkt des Koordinatensystems definierter Betrag gleich oder annähernd gleich der Periodenfrequenz der Störgröße ist.

Der Erfindung liegt die Aufgabe zugrunde, konkrete Realisierungsmöglichkeiten zum Einregeln periodisches Führungsgrößen und zum Ausregeln periodischer Störgrößen für die eingangs beschriebene Regelungs-Anordnung anzugeben.

Die Merkmalskombination gemäß Anspruch 1 gibt eine solche Realisierungsmöglichkeit an und zwar zum Einregeln einer periodischen Führungsgröße.

Die Merkmalskombination gemäß den Ansprüchen 2 und 3 geben zwei Realisierungsmöglichkeiten zum Ausregeln einer periodischen Störgröße an.

Alle drei Realisierungsmöglichkeiten beruhen auf dem gleichen Lösungsprinzip.

Ausgestattungen dieses Lösungsprinzips und eine besondere Anwendung sind Gegenstand der Ansprüche 3 bis 7. Die Erfindung wird nachfolgend anhand der Zeichnungen beschrieben.

Es zeigen:

**Figur 1** das Blockschaltbild für eine Regelungs-Anordnung,

**Figur 2** eine erste etwas detailliertere Ausführungsform des Reglers aus Figur 1,

**Figur 3a** einen Gleichsignalsprung der Regeldifferenz,

**Figur 3b** die Sprungantwort eines üblichen $PT_1$-Reglers und eines üblichen I-Reglers auf den Gleichsignalsprung gemäß Figur 3a,

**Figur 4a** einen Wechselsignalsprung der Regeldifferenz,

**Figur 4b** die Antwort eines integralen Bandpaßreglers auf den Wechselsignalsprung gemäß Figur 4a,

**Figur 5** die Lage eines Polstellenpaares für einen integralen Bandpaßregler im Koordinatensystem der komplexen Veränderlichen,

**Figur 6a** wiederum einen Wechselsignalsprung der Regeldifferenz,

**Figur 6b** die Sprungantwort eines proportionalen Bandpaßreglers auf den Wechselsignalsprung gemäß Figur 6a,

**Figur 7** die Lage eines Polstellenpaares für einen proportionalen Bandpaßregler im Koordinatensystem der komplexen Veränderlichen,

**Figur 8** eine praktische Realisierung eines integralen Bandpaßreglers,

**Figur 9** eine praktische Realsierung eines proportionalen Bandpaßreglers,

**Figur 10** eine Schabradschleifmaschine, bei der die erfindungsgemäße Regelungs-Anordnung Anwendung findet.

**Figur 11** eine zweite etwas detailliertere Ausführungsform des Reglers aus Figur 1,

**Figur 12** das Blockschaltbild für eine praktische Realisierung eines Kammfilter-Reglers,

**Figur 13** eine graphische Darstellung der Abhängigkeit des Betrages des Frequenzganges eines proportionalen Kammfilter-Reglers von der Kreisfrequenz,

**Figur 14** die Lage der Polstellen für einen proportionalen Kammfilter-Regler im Koordinatensystem der komplexen Veränderlichen,

**Figur 15** der Betrag des Frequenzganges eines integralen Kammfilter-Reglers in Abhängigkeit von der Kreisfrequenz,

**Figur 16** die Lage der Polstellen für einen integralen Kammfilter-Regler im Koordinatensystem der komplexen Veränderlichen,

**Figur 17** der Betrag eines anderen Frequenzganges des integralen Kammfilter-Reglers in Abhängigkeit von der Kreisfrequenz,

**Figur 18** eine praktische Realisierung des Kammfilter-Reglers nach Figur 12,

**Figur 19** eine im kontinuierlichen Abwälzverfahren arbeitende Zahnradbearbeitungsmaschine, bei der die erfindungsgemäße Regelungs-Anordnung Anwendung findet.

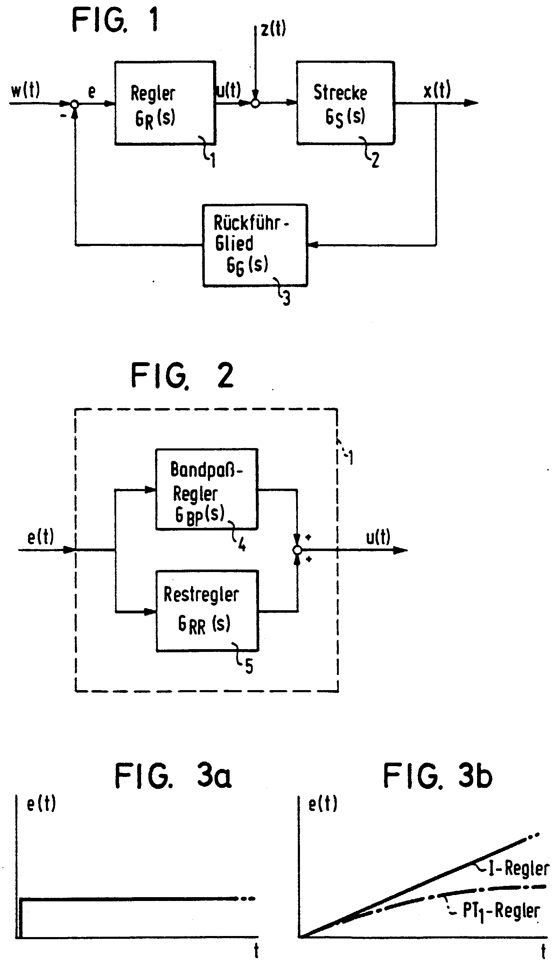

Die in Figur 1 gezeigte Regelungs-Anordnung ist ein üblicher Regelkreis mit Regler 1 und Strecke 2, wobei allerdings im Rückkopplungszweig ein Rückführglied 3 eingeschaltet ist. Letzteres ist aber nicht zwingend notwendig. Zunächst sollen die verwendeten Abkürzungen definiert werden. Es bedeuten:

t = Zeit

s = komplexe Veränderliche = $\sigma + j\omega$

= Realteil der komplexen Veränderlichen

f = technisch-physikalische Frequenz

$\omega = 2\pi f$ = Kreisfrequenz

w = Führungsgröße in Abhängigkeit von der Zeit t

e = Regeldifferenz in Abhängigkeit von der Zeit t

u = Stellgröße in Abhängigkeit von der Zeit t

z = Störgröße in Abhängigkeit von der Zeit t

x = Regelgröße in Abhängigkeit von der Zeit t

a = Ausgangsgröße des Kammfilter-Reglers in Abhängigkeit von der Zeit t

W = Führungsgröße in Abhängigkeit von der Kreisfrequenz ω

E = Regeldifferenz in Abhängigkeit von der Kreisfrequenz ω

U = Stellgröße in Abhängigkeit von der Kreisfrequenz ω

Z = Störgröße in Abhängigkeit von der Kreisfrequenz ω

X = Regelgröße in Abhängigkeit von der Kreisfrequenz ω

$G_R(s)$ = Übertragungsfunktions des Reglers

$G_S(s)$ = Übertragungsfunktion der Strecke

$G_G(s)$ = Übertragungsfunktion des Rückführgliedes

$G_{BP}(s)$ = Übertragungsfunktion des Bandpaßreglers

$G_{KF}(s)$ = Übertragungsfunktion des Kammfilter-Reglers

$G_{RR}(s)$ = Übertragungsfunktion des Restreglers

$G_W(s)$ = Übertragungsfunktion zwischen der Führungsgröße W und der Regelgröße X bei geschlossenem Regelkreis

$G_Z(s)$ = Übertragungsfunktion zwischen der Störgröße Z und der Regelgröße X bei geschlossenem Regelkreis

$G_{KF}(j\omega)$ = Frequenzgang des Kammfilters

R = wählbarer Widerstand

C = wählbare Kapazität

$U_e$ = der Regeldifferenz entsprechende Eingangsspannung in Abhängigkeit von der Kreisfrequenz ω

$U_u$ = der Stellgröße entsprechende Ausgangsspannung in Abhängigkeit von der Kreisfrequenz ω

$U_u$ = der Stellgröße entsprechende Ausgangsspannung in Abhängigkeit von der Kreisfrequenz

$T_i$ = Integrationskonstante des üblichen 1-Reglers

$T_v$ = Verzögerungszeit des Totzeitgliedes

$K_1$ = Verstärkungsfaktor

$K_2$ = Verstärkungsfaktor.

Bei der nachfolgenden Betrachtung sollen die periodischen Signale der Einfachheit halber als sinusförmig angenommen werden. Da sich bekanntlich nicht-sinusförmige periodische Signale nach Fourier in eine Reihe sinusförmiger Signale zerlegen lassen, gelten die für sinusförmige periodische Signale angestellten Betrachtungen gleichermaßen für nicht-sinusförmige periodische Signale. Die Konsequenzen werden später noch erläutert.

Ziel der Erfindung ist es, die in Figur 1 gezeigte Regelungs-Anordnung für eine sinusförmige Führungsgröße w und/oder für eine sinusförmige Störgröße z so auszugestalten, daß die Führungsgröße w möglichst vollständig eingeregelt wird und/oder die Störgröße z möglichst vollständig ausgeregelt wird. Das bedeutet also, daß die Regelgröße x der sinusförmigen Führungsgröße w möglichst ohne Regelabweichung folgen soll, und das bedeutet ferner, daß die Regelgröße x auf eine sinusförmige Störgröße z möglichst nicht reagieren soll.

In den folgenden Gleichungen (1) bis (6) wird die Übertragungsfunktion $G_w(s)$ für die Führungsgröße w ermittelt.

$$X = G_S \cdot U \qquad \textit{für } Z = 0 \tag{1}$$

$$U = G_R \cdot E = G_R \cdot (W - G_G \cdot X) \tag{2}$$

$$X = G_S \cdot G_R \cdot (W - G_G \cdot X) \tag{3}$$

$$X + G_S \cdot G_R \cdot G_G \cdot X = G_S \cdot G_R \cdot W \tag{4}$$

$$(1 + G_S \cdot G_R \cdot G_G) \cdot X = G_S \cdot G_R \cdot W \tag{5}$$

$$\frac{X}{W} = G_W(s) = \frac{G_S \cdot G_R}{1 + G_S \cdot G_R \cdot G_G} \tag{6}$$

Damit die Regelgröße x der Führungsgröße w ohne Regelabweichung folgt, geltend unabhängig von der Frequenz folgende allgemeine Grenzwertbetrachtungen:

$$\text{für } G_R \rightarrow \infty \text{ und/oder } G_S \rightarrow \infty \text{ ergibt sich } G_W = 1, \text{ falls } G_G = 1 \text{ ist} \tag{7}$$

Zunächst sei ein Gleichsignal-Sprung betrachtet, wie er in Figur 3a gezeigt ist. Auf diesen Signalsprung reagiert ein normaler I-Regler dadurch, daß sein Ausgangssignal - von Null ausgehend - stetig ansteigt, wie dies in Figur 3b gezeigt ist.

Der normale I-Regler hat die Übertragungsfunktion

$$G_R = \frac{1}{s \cdot T} \tag{8}$$

Das bedeutet, daß der normale I-Regler Tiefpaßverhalten mit der Grenzfrequenz Null hat. Bei der Frequenz Null hat er eine Polstelle. Demnach erfüllt der normale I-Regler bei $G_G = 1$ die Bedingung für $G_W = 1$ gemäß Gleichung (7).

Nunmehr soll gemäß den folgenden Gleichungen ( 9 bis 14) die Übertragungsfunktion für die Störgröße z berechnet werden:

$$X = G_S \cdot (Z + U) \qquad \textit{für } W = 0 \tag{9}$$

$$U = G_R \cdot E = -G_R \cdot G_G \cdot X \tag{10}$$

$$X = G_S \cdot Z - G_S \cdot G_R \cdot G_G \cdot X \tag{11}$$

$$X + G_S \cdot G_R \cdot G_G \cdot X = G_S \cdot Z \tag{12}$$

$$(1 + G_S \cdot G_R \cdot G_G) \cdot X = G_S \cdot Z \tag{13}$$

$$\frac{X}{Z} = G_Z(s) = \frac{G_S}{1 + G_S \cdot G_R \cdot G_G} \tag{14}$$

Damit die Störgröße z die Regelgröße x nicht beeinflußt, gilt folgende Grenzwertbetrachtung:

$$\textit{für } G_G \rightarrow \infty \text{ und/oder } G_R \rightarrow \infty \text{ ergibt sich } G_I = 0 \tag{15}$$

Diese Bedingung erfüllt der normale I-Regler wiederum für den Gleichsignal-Sprung.

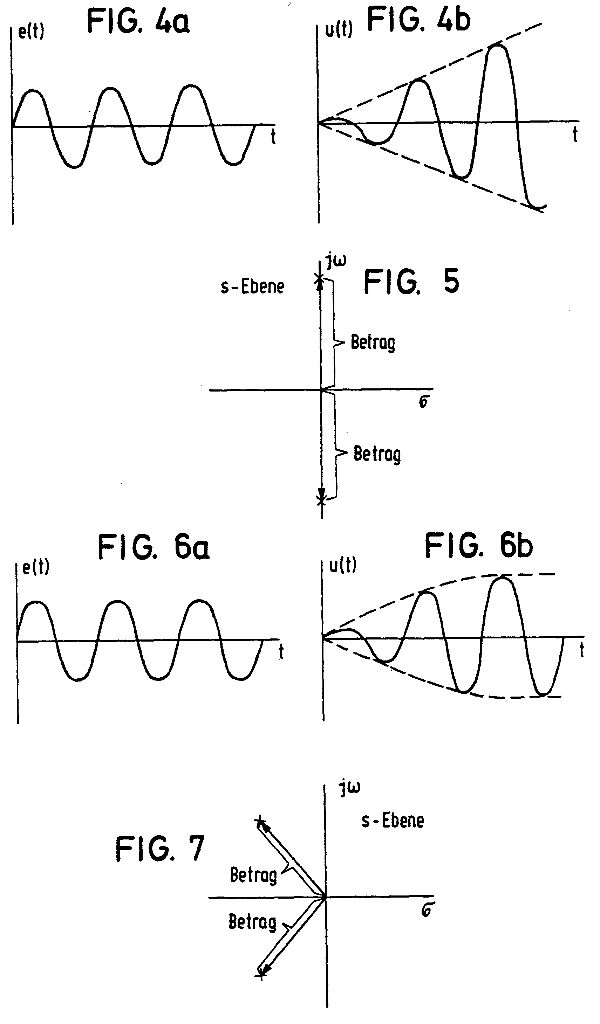

Betrachtet man nun anstelle des Gleichsignal-Sprunges einen Wechselsignalsprung, wie er in Figur 4a gezeigt ist, so hat das Wechselsignal eine bestimmte Frequenz, die nicht Null ist. Das bedeutet, daß der normale I-Regler mit der Übertragungsfunktion gemäß Gleichung (8) bei dieser Frequenz eine endliche Regelverstärkung hat. Dies wiederum hat zur Folge, daß die Übertragungsfunktion $G_Z$ für die Störgröße z gemäß Gleichung (14) aufgrund der Wirkung des normalen I-Reglers nicht mehr Null sein kann. Demnach wird eine sinusförmige Störgröße z nicht vollständig ausgeregelt.

Es soll nun untersucht werden, wie die Bedingung $G_W \rightarrow 1$ bei $G_G = 1$ gemäß der Gleichung (7) für eine sinusförmige Führungsgröße w erfüllt werden kann. Die Lösung liegt darin, daß der Regler 1 und/oder die Strecke 2 so konzipiert werden, daß sie Bandpaßverhalten haben, wobei das Polstellenpaar bei der Periodenfrequenz der Führungsgröße w liegen muß. Da die Strecke in der Regel nicht beeinfußbar ist, muß der Regler in dieser Weise dimensioniert werden.

Zur Erfüllung der Bedingung $G_Z \rightarrow 0$ gemäß Gleichung (15) liegt die Lösung für eine sinusförmige Störgröße z darin, daß der Regler 1 und/oder Rückführglied 3 bei der Periodenfrequenz der Störgröße z eine Polstelle haben, also Bandpaßverhalten zeigen. Zusätzlich oder alternativ kann die Strecke 2 bei dieser Frequenz eine Nullstelle haben. Die Strecke müßte als Bandsperre wirken. Da die Strecke, wie erwähnt, in der Regel nicht oder nur unter Schwierigkeiten beeinflußbar ist, bleiben die Polstellen bei der Periodenfrequenz der Störgröße z für den Regler und/oder das Rückführglied als praktisch einfach realisierbare Lösungsmöglichkeiten.

Damit der Regler 1 und/oder das Rückführglied 3 die Bedingung $G_R \rightarrow \infty$ bzw. $G_G \rightarrow \infty$ erfüllen, sollen sie bei der Frequenz der Stör- bzw. Führungsgröße eine unendliche Verstärkung, also integralen Charakter oder wenigstens eine sehr hohe endliche Verstärkung, also proportionalen Charakter haben.

Bei nicht-sinusförmigen periodischen Führungs- oder Störsignalen wären für den Regler 1 bzw. das Rückführglied 3 ggf. weitere Polstellen bei den Harmonischen der Grundfrequenz zu setzen.

Figur 2 zeigt einen Regler 1, der sich aus einem Bandpaßregler 4 und einem Restregler 5 zusammensetzt. Der Bandpaßregler 4 kann ein integraler oder proportionaler Regler der zuvor beschriebenen Art sein. Für den Restregler 5 gibt es keine bestimmten Bedingungen, d.h. er kann z.B. ein PD-Regler oder ein PID-Regler sein. Falls seine Übertragungsfunktion Pole hat, müssen diese nicht bei der Periodenfrequenz der Führungsgröße w oder der Periodenfrequenz der Störgröße z liegen. Ggf. kann der Restregler auch ganz entfallen.

Die Übertragungsfunktion des aus dem Bandpaßregler 4 und dem Restregler 5 gemäß Figur 2 zusammengesetzten Reglers 1 ist :

$$G_R = G_{RR} + G_{BP} \qquad (16)$$

Setzt man anstelle von $G_R$ in die Gleichungen (6) und (14) $G_{RR} + G_{BP}$, so werden die Grenzwertüberlegungen gemäß den Gleichungen (7) und (15) dadurch nicht beeinträchtigt, wenn nunmehr statt $G_R \rightarrow \infty$ gesetzt wird $G_{BP} \rightarrow \infty$.

Das bedeutet mit anderen Worten, daß der Restregler für die hier betrachtete Funktion des Bandpaßreglers ohne Einfluß ist.

Das Verhalten eines integralen Bandpaßreglers ist durch die Figuren 4a und 4b demonstriert. Auf einen Wechselsignalsprung der Regelgröße e gemäß Figur 4a reagiert der integrale Bandpaßregler mit der Erzeugung einer Stellgröße u, die ebenfalls ein Wechselsignal mit der gleichen Frequenz und stetig steigender Amplitude ist. Was die stetig steigende Amplitude betrifft, besteht Übereinstimmung mit dem normalen I-Regler gemäß Figur 3b. Der integrale Bandpaßregler hat bei der Resonanzfrequenz, d.h. bei seiner Polstelle eine unendliche Verstärkung. Er ist demnach in Analogie zum normalen I-Regler bei stationären Signalsprüngen geeignet, eine periodische Führungsgröße w vollständig einzuregeln und eine periodische Störgröße z vollständig auszuregeln.

Wie man der Fig. 5 entnehmen kann, liegen die Polstellen des integralen Bandpaßreglers auf der imaginären Achse jω im Koordinatensystem der komplexen Veränderlichen s. Der Betrag der Polstellen ist gleich ihrem Abstand vom Nullpunkt.

Dieser Betrag muß so gewählt werden, daß er gleich der Periodenfrequenz der Führungs- bzw. Störgröße ist.

Der proportionale Bandpaßregler ist durch die Figuren 6a und 6b gekennzeichnet. Auf den in Figur 6a gezeigten Wechselsignalsprung der Regelabweichung e antwortet der proportionale Bandpaßregler mit der Erzeugung einer Stellgröße u, die wiederum ein Wechselsignal mit der gleichen Frequenz ist und deren Amplitude sich innerhalb einer Einschwingzeit auf einen konstanten Wert einstellt. Was die Amplitude betrifft, besteht insoweit Übereinstimmung mit dem auf einen Signalsprung reagierenden normalen PT$_1$-Regler gemäß Figur 3b. Wie dieser kann auch der proportionale Bandpaßregler einer periodischen Führungsgröße w nicht vollständig ohne Regeldifferenz folgen, und er vermag auch eine periodische Störgröße z nicht vollständig auszuregeln.

Wie man der Fig. 7 entnehmen kann, liegen die Polstellen des proportionalen Bandpaßreglers links der imaginären Achse im Koordinatensystem der komplexen Veränderlichen s. Auch hier ist der Betrag der Polstellen (also ihr Abstand vom Nullpunkt) so zu wählen, daß er gleich der Periodenfrequenz der Führungs- bzw. Störgröße ist.

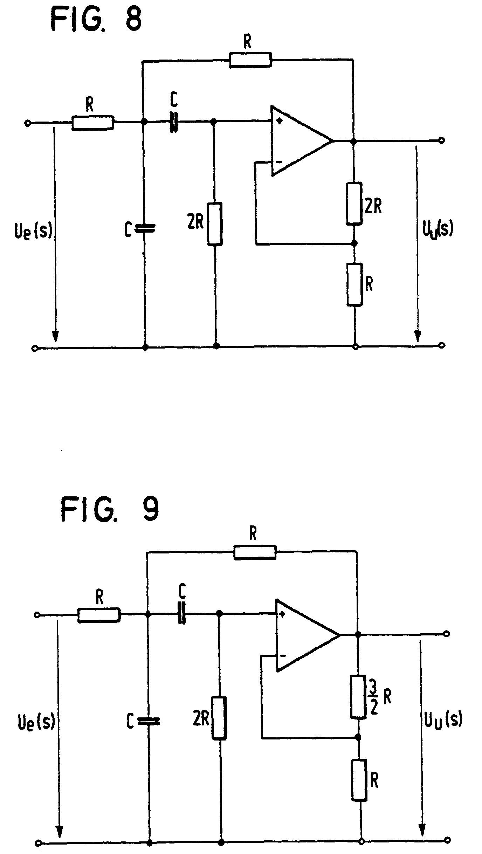

Eine praktische Realisierung für einen integralen Bandpaßregler ist in Figur 8 gezeigt. Die komplexe Übertragungsfunktion dieses integralen Bandpaßreglers lautet:

$$G_{IBP}(s) = \frac{3 \cdot s \cdot R \cdot C}{1 + (s \cdot R \cdot C)^2} \qquad (17)$$

Der integrale Bandpaßregler hat - wie man aus dem Nenner von (17) erkennt - zwei Polstellen auf der imaginären Achse der komplexen s-Ebene, die bei

$$s = \pm\, j\, \frac{1}{RC}$$

liegen. In diesem Fall ist der Betrag der Polstellen gleich deren Imaginärteil.

Für die technisch-physikalische Kreisfrequenz jω ist an der Stelle

$$j\omega = j\, \frac{1}{RC} \tag{18}$$

die komplexe Übertragungsfunktion.

$$G_{IBP} \to \infty$$

Der Betrag der Pole des Polstellenpaares ist

$$|s| = \omega = 2\pi f = \frac{1}{RC} \tag{19}$$

In diesem Fall müssen also R und C so bemessen werden, daß f gleich der Periodenfrequenz der Führungs- bzw. Störgröße ist.

Weiteres darüber findet man in dem Buch von U.Tietze und CH.Schenk "Halbleitertechnik", Seite 433.

Eine praktische Realisierung für einen proportionalen Bandpaßregler ist in Figur 9 gezeigt. Seine komplexe Übertragungsfunktion lautet:

$$G_{PBP}(s) = \frac{\frac{5}{2}\cdot s\cdot R\cdot C}{1 + \frac{1}{2}\cdot s\cdot R\cdot C + (s\cdot R\cdot C)^2} \tag{20}$$

Der proportionale Bandpaßregler hat - wie man aus dem Nenner von (20) erkennt - ein konjugiert komplexes Polstellenpaar, das links der imaginären Achse im Koordinatensystem der komplexen Veränderlichen s liegt. Die beiden Pole des Polstellenpaares liegen bei

$$s = \frac{1}{4}\, RC\, [-1 \pm j\sqrt{15}\,] \tag{21}$$

Der Betrag der Pole des Polstellenpaares ist

$$|s| = \omega = 2\pi f = \frac{1}{4RC}\sqrt{1^2 + \sqrt{15}^{\,2}} = \frac{1}{RC} \tag{22}$$

Für die technisch-physikalische Kreisfrequenz jω ist an der Stelle

$$j\omega = j\, \frac{1}{RC} \tag{23}$$

die komplexe Übertragungsfunktion

$$G_{PBP} = 5$$

Auch in diesem Fall müssen also R und C so bemessen werden, daß f gleich der Periodenfrequenz der Führungs- bzw. Störgröße ist.

Anstelle einer Realisierung des Bandpaßreglers bzw. des Rückführungsgliedes mit Bandpaßverhalten durch analoge Filterschaltungen, können auch digitale Filterschaltungen mit Mikroprozessoren eingesetzt werden, wie dies beispielsweise FIR-Filter und IIR-Filter sind (siehe Buch von U.Tietze und CH.Schenk "Halbleiterschaltungstechnik" Seiten 807ff und Seite 833ff).

Durch Einsatz eines integralen Bandpaßreglers ist es auch möglich, sowohl eine periodische Führungsgröße w ohne Regelabweichung einzuregeln als auch eine periodische Störgröße z vollständig auszuregeln. Wenn die Periodenfrequenzen unterschiedlich sind, muß der integrale Bandpaßregler eine Polstelle bei jeder der beiden Periodenfrequenzen und ggf. weitere Polstellen bei den Harmonischen davon haben. Wenn die beiden Periodenfrequenzen gleich sind, fallen die beiden Polstellen zusammen.

Bemerkenswert ist in diesem Zusammenhang, daß das gleichzeitige Einregeln einer periodischen Führungsgröße w und das Ausregeln einer periodischen Störgröße z durch Verwendung eines Rückführgliedes, das Bandpaßverhalten hat, nicht möglich ist. Mit dem Rückführglied kann nur eine periodische Störgröße z ausgeregelt, nicht aber eine Führungsgröße w eingeregelt werden. Ist dagegen in der Führungsgröße ein unerwünschter Anteil dieser Frequenz, so wird dieser unterdrückt.

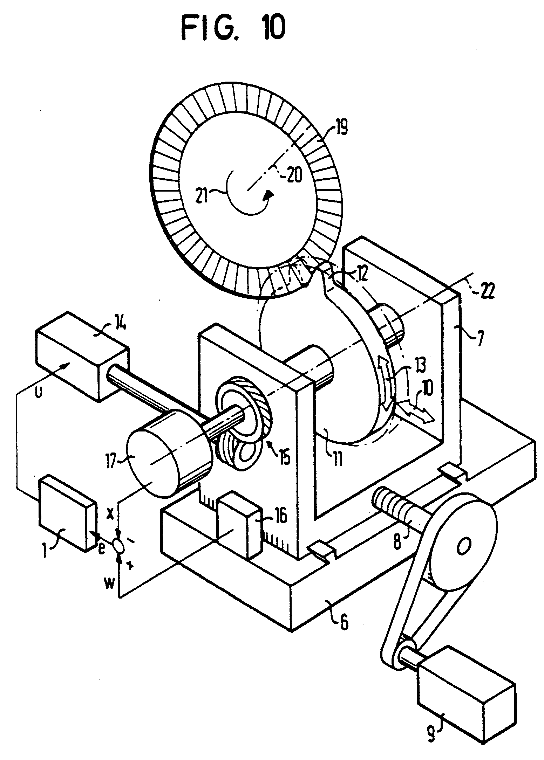

Einen praktischen Fall für die Anwendung einer Regelungs-Anordnung der vorstehend beschriebenen Art zeigt die in Figur 10 schematisch dargestellte Schabrad-Schleifmaschine. Auf einer Schlittenführung 6 ist ein Schlitten 7 linear verschiebbar angeordnet. Die Linearverschiebung des Schittens 7 erfolgt durch einen Antrieb 9 über eine Gewindespindel 8, derart, daß der Schlitten 7 eine Hin- und Herbewegung ausführt, wie dies durch den Doppelpfeil 10 angedeutet ist. An dem Schlitten 7 ist das zu schleifende Schabrad 11 drehbar um eine Achse 22 gehalten. Von dem Schabrad 11 sind der Einfachheit halber nur zwei Zähne 12 gezeigt. Das Schabrad kann mittels eines Antriebs 14 über einen Schneckentrieb 15 hin- und hergedreht werden, wie dies durch den Doppelpfeil 13 angedeutet ist. In die Lücke zwischen zwei Zähnen 12 des Schabrades 11 greift eine Schleifscheibe 19 ein, die um eine schräg gestellte Achse 20 rotiert, wie dies durch den Pfeil 21 angedeutet ist.

Die periodische Linearbewegung des Schabrades 6 gem. Doppelpfeil 10 wird durch einen Sensor 16 gemessen, der diese Linearbewegung als Führungsgröße w ausgibt. Mit der Achse 22 des Schabrades 11 ist ein Winkelgeber 17 gekoppelt, der die Drehbewegung des Schabrades 11 als Ist-Wert x ausgibt. Die Regeldifferenz e wird einem Regler 1 mit Bandpaßanteil zugeführt. Dieser erzeugt den Stellwert u für den Antrieb 14. Auf diese Weise wird die hin- und hergehende Drehbewegung des Schabrades 11 durch die hin- und hergehende Linearbewegung des Schlittens 7 geführt. Bei jeder Hin- und Herbewegung des Schabrades 11 erfolgt ein Schleifkontakt mit Schleifscheibe 19. Dieser Schleifkontakt wirkt sich störend auf das Drehmoment des Antriebs 14 aus, mit dem das Schabrad 11 als Folge der Linearbewegung des Schlittens 7 hin- und hergedreht werden muß. Die Störung kann zu Fehlern beim Schleifen des Schabrades 11 führen.

Im vorliegenden Fall haben die Hin- und Herbewegung des Schlittens 7, die Hin- und Herbewegung des Schabrades 11 und die Störkontakte zwischen Schabrad 11 und Schleifscheibe 19 die gleiche Grundfrequenz. Wie oben beschrieben, ist es durch die Verwendung des Reglers 1 mit Bandpaßanteil der konjugiert komplexe Polstellen bei der Grundfrequenz und allen vorkommenden Harmonischen haben muß, nicht nur möglich, eine Führung des Antriebes 14 durch den Antrieb 9 ohne Regeldifferenz zu gewährleisten, sondern außerdem auch die durch die Schleifkontakte zwischen Schabrad 11 und Schleifscheibe 19 auftretenden Störungen vollständig auszuregeln.

Der vorstehend erwähnte Regler 1 mit Bandpaßanteil, der konjugiert komplexe Polstellen bei der Grundfrequenz und allen vorkommenden Harmonischen haben muß, soll nachfolgend als Kammfilter-Regler bezeichnet werden. Der Bandpaßregler mit nur einem Polstellenpaar ist als Spezialfall des Kammfilter-Reglers zu betrachten. Unter diesem Aspekt gelten die vorstehend für den Bandpaßregler angestellten Überlegungen gleichermaßen auch für den Kammfilter-Regler.

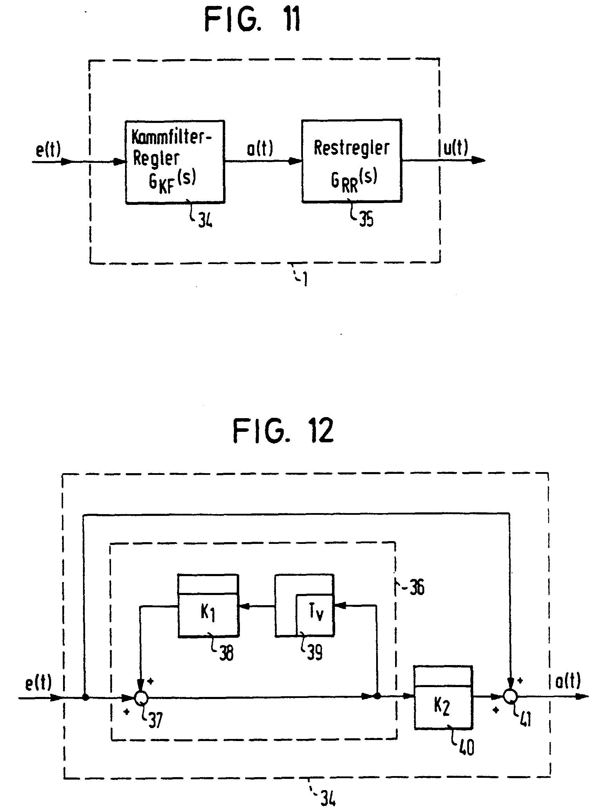

Figur 11 stellt eine Alternative zu Figur 2 dar. In Figur 11 ist der Regler 1 aus einem Kammfilter-Regler 34 und einem Restregler 35 gebildet, die in Serie geschaltet sind. Die Übertragungsfunktion des zusammengesetzten Reglers 1 ergibt sich hier wie folgt:

$$G_R(s) = G_{KF}(s) \cdot G_{RR}(s) \tag{24}$$

Setzt man anstelle von $G_R$ in die Gleichungen (6) und (14) $G_{KF} \cdot G_{RR}$, so werden die Grenzwertüberlegungen gemäß den Gleichungen (7) und (15) dadurch nicht beeinträchtigt, wenn nunmehr statt $G_R \to \infty$ gesetzt wird $G_{KF} \to \infty$. Das bedeutet mit anderen Worten, daß der Restregler auch hier für die betrachtete Funktion des Kammfilter-Reglers ohne Einfluß ist. Für den Kammfilter-Regler gelten selbstverständlich auch die im Zusammenhang mit Figur 2 angestellten Überlegungen und umgekehrt.

Gemäß Figur 12 ist das Kernstück des Kammfilter-Reglers 34 eine Mitkopplungsschaltung 36, die einen Addierer 37 enthält. Dem Addierer 37 werden die Regeldifferenz e und ein Mitkopplungssignal zur Addition zugeführt. Das Mitkopplungssignal wird dem Addierer 37 über einen Mitkopplungszweig zugeführt, der mit dem Ausgang des Addierers 37 verbunden ist. Der Mitkopplungszweig enthält ein Totzeitglied 39 mit einer Verzögerungszeit $T_V$ und einen frequenzunabhängigen Verstärker 38 mit dem Verstärkungsfaktor $K_1$. Der Mitkopplungsschaltung 36 ist ein weiterer frequenzunabhängiger Verstärker 40 mit dem Verstärkungsfaktor $K_2$ nachgeschaltet. Das Ausgangssignal des weiteren Verstärkers 40 sowie die Regeldifferenz *e* werden in einem weiteren Addierer 41 addiert. Aus der Summe dieser beiden Signale ergibt sich dann die Ausgangsgröße a des Kammfilter-Reglers 34.

Die Übertragungsfunktion des in Figur 12 gezeigten Kammfilter-Reglers lautet:

$$G_{KF}(s) = \frac{K_2 + 1 - K_1 \cdot e^{-sT_v}}{1 - K_1 \cdot e^{-sT_v}} \qquad (25)$$

Für den zugehörigen Frequenzgang ergibt sich:

$$G_{KF}(j\omega) = \frac{K_2 + 1 - K_1 \cdot e^{-j\omega T_v}}{1 - K_1 \cdot e^{-j\omega T_v}} \qquad (26)$$

Mit

$$\omega = n \cdot \frac{2\Pi}{T_v}$$

folgt:

$$G_{KF}(jn\,\frac{2\pi}{T_v}) = \frac{K_2 + 1 - K_1}{1 - K_1} = K_{max} \qquad (27)$$

mit n =...-3,-2,-1,0,1,2,3......

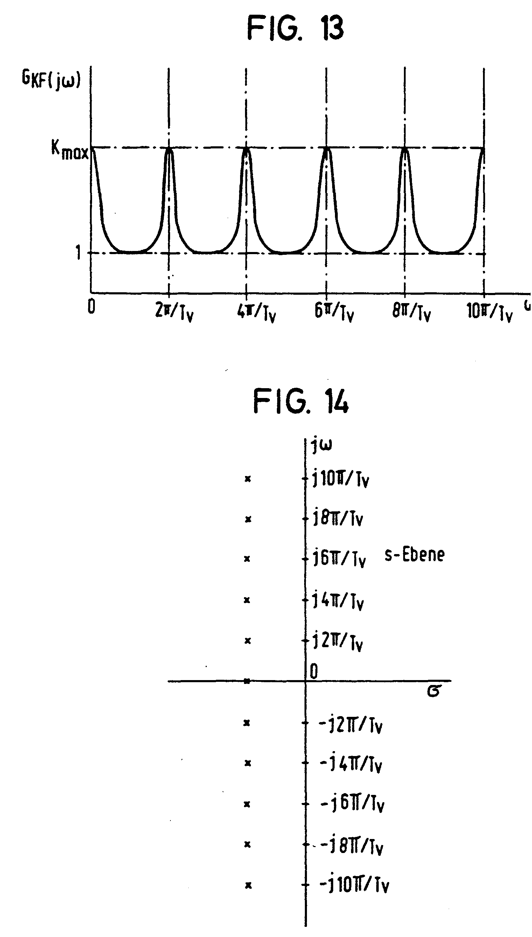

In Figur 13 ist der Betrag des Frequenzganges in Abhängigkeit von der Kreisfrequenz für den Fall $0 < K_1 < 1$ gezeigt. Bei der Kreisfrequenz Null, bei der Grundkreisfrequenz und bei allen Vielfachen der Grundkreisfrequenz (Höherharmonische) ergibt sich die Verstärkung $K_{max}$, welche über den Verstärkungsfaktor $K_1$ zwischen dem Wert Null und Unendlich einstellbar ist.

In Figur 14 ist die Verteilung der Polstellen im Koordinatensystem der komplexen Veränderlichen s gezeigt. Alle Polstellen liegen links der imaginären Achse.

Die Figuren 13 und 14 kennzeichnen demnach einen proportionalen Kammfilter-Regler.

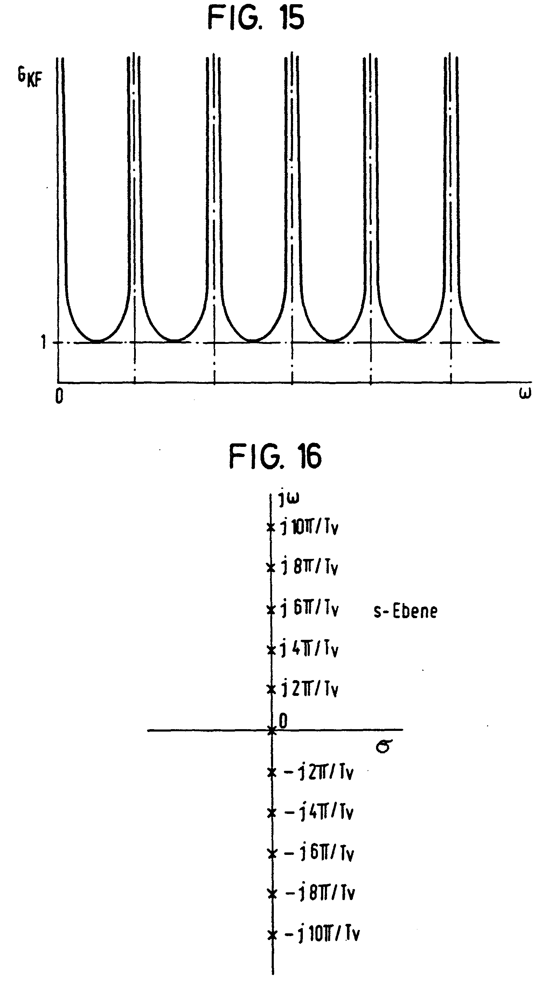

Mit $K_1 = 1$ folgt $K_{max} = \infty$, und es ergibt sich der von der Kreisfrequenz abhängige Betrag des Frequenzganges in Figur 15.

Die dem in Figur 15 gezeigten Betrag des Frequenzganges entsprechende Verteilung der Polstellen im Koordinatensystem der komplexen Veränderlichen s ist in Figur 16 dargestellt. Man erkennt, daß alle Pole auf der imaginären Achse liegen. Dementsprechend kennzeichnen die Figuren 15 und 16 einen integrierenden Kammfilter-Regler.

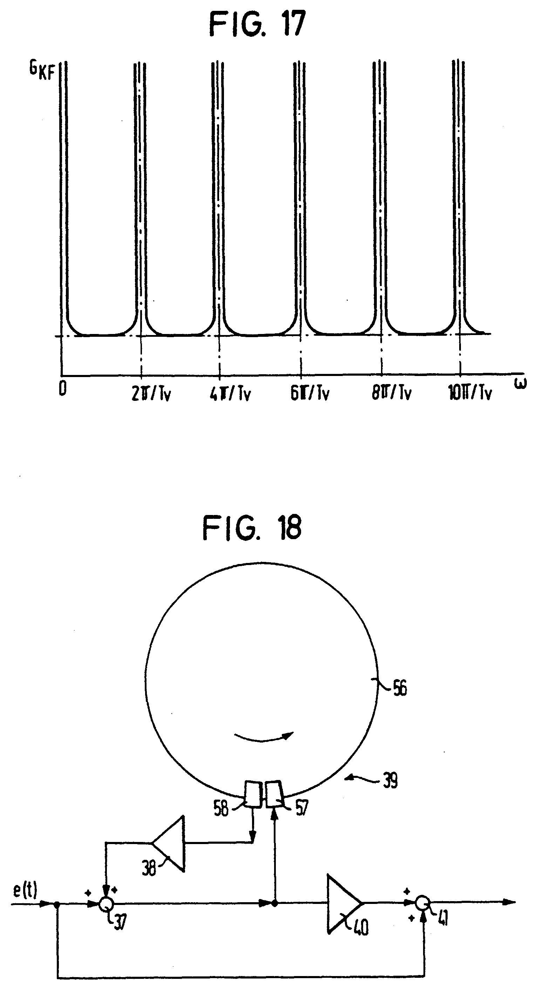

Über $K_2$ wird die Bandbreite des Kammfilter-Reglers und somit der Einfluß auf die übrigen Frequenzbereiche abgestimmt. In Figur 17 ist der Betrag des Frequenzganges eines integrierenden Kammfilter-Reglers mit $K_1 =1$ und mit kleinerem $K_2$ als bei dem Kammfilter-Regler gemäß Figur 15 dargestellt.

Der erfindungsgemäße Kammfilter-Regler kann sowohl in Analog- als auch in Digitaltechnik realisiert werden.

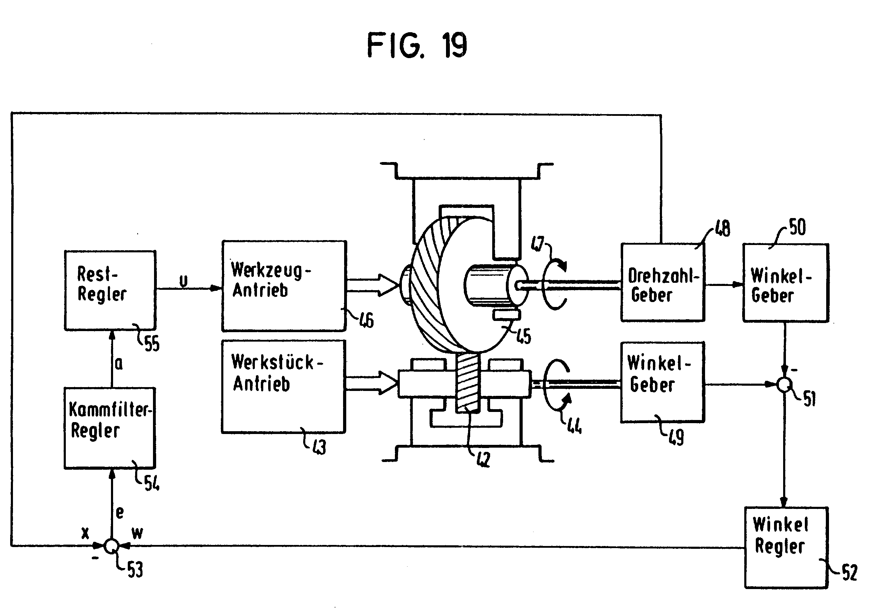

Eine analoge Ausführungsform des Kammfilter-Reglers ist in Figur 18 prinzipiell dargestellt. Entsprechende Schaltungsteile sind mit den gleichen Bezugsziffern versehen worden, wie in Figur 12. Die Multiplikation mit den Faktoren $K_1$ und $K_2$ wird durch die Analogenverstärker 38 und 40 realisiert. Mit 37 und 41 sind Addierer bezeichnet. Das analoge Totzeitglied 39 ist durch eine drehbar gelagerte magnetisierbare Scheibe 56 sowie einen mit ihrem Rand korrespondierenden Schreibkopf 57 und einem Lesekopf 58 realisiert. Die Scheibe wird mit einer Drehfrequenz gedreht, die mit der Grundfrequenz der periodischen Stör- bzw. Führungsgröße übereinstimmt. Dazu kann sie beispielsweise mit dem später noch im Zusammenhang mit Figur 19 erläuterten Werkstück 42 gekoppelt sein. Wird der Abstand zwischen dem Schreibkopf 57 und dem Lesekopf 58 sehr gering gewählt, so wird nach annähernd einer Umdrehung der Scheibe 56 das vom Schreibkopf 57 aufgezeichnete Signal von dem Lesekopf 58 mit entsprechender Verzögerung bzw. Totzeit ausgelesen.

Ein weiterer praktischer Fall für die Anwendung des erfindungsgemäßen Bandpaßreglers bzw. Kammfilter-Reglers zeigt die in Figur 19 prinzipiell dargestellte Anordnung zur Bearbeitung von Zahnrädern. Hierbei wird ein zahnrad- bzw.

schneckenförmiges Werkzeug 45 kontinuierlich mit einem zahnradförmigen Werkstück 42 abgewälzt. Das Werkstück 42 wird über einen Führungsantrieb 43 drehzahlgeregelt, so daß sich die mit dem Pfeil 44 angedeutete Drehrichtung ergibt. Das Werkzeug 45 wird von dem Folgeantrieb 46 angetrieben, wodurch sich die mit dem Pfeil 47 angedeutete Drehrichtung ergibt. Mit dem Werkstück 42 ist ein Winkelgeber 48 gekoppelt. Mit dem Werkzeug 45 ist ein Drehzahlgeber 48 und ein Winkelgeber 50 gekoppelt. Die von den beiden Winkelgebern 49,50 erzeugten Ausgangssignale werden einem Differenzbildner 51 zugeführt. Die so erzeugte Regeldifferenz wird einem Winkelregler 52 zugeführt, der den Drehzahlsollwert für den Folgeantrieb 46 erzeugt. Der Drehzahlsollwert w und die von dem Drehzahlgeber 48 erzeugte Drehzahl-Regelgröße x werden einem weiteren Differenzbildner 53 zugeführt, welcher die Regeldifferenz e erzeugt und einem Kammfilter-Regler 54 zuführt. Die Ausgangsgröße des Kammfilter-Reglers 54 wird einem Restregler 55 zugeführt, der die Stellgröße u erzeugt und dem Folgeantrieb 46 zuführt.

Da das Werkzeug 45 gegenüber dem Werkstück 42 sehr geringe VerzahnungsAbweichungen aufweist, werden die auftretenden Drehzahl- und Winkelschwankungen maßgeblich durch die Verzahnungsabweichungen des Werkstückes beeinflußt.

Wird der Kammfilter-Regler 54 mit einer Totzeit realisiert, welche dem Kehrwert der Drehfrequenz des Werkstückes 42 entspricht, so kann die durch das Werkstück 42 hervorgerufene periodische Regeldifferenz eliminiert werden.

Es sei noch hinzugefügt, daß das mathematische Modell der der Regelstrecke im Rahmen der beschriebenen Lösung nicht bekannt sein muß. Es ist lediglich eine Phasenreserve von $\Pi/2$ in der nächsten Umgebung der Führungs- bzw. Störfrequenz aus Stabilitätsgründen nötig.

Weiterhin sei bemerkt, daß die Regelungs-Anordnung linear sein muß, d. h. daß auch alle ihre Glieder, also Regler, Strecke, Rückführglied u.s.w. linear sein müssen.

Weiterhin soll natürlich der triviale Fall ausgeschlossen sein, daß die Strecke bei der Störfrequenz eine Übertragungsnullstelle besitzt, da sich dann weitere Maßnahmen erübrigen würden.

Anstelle des in der Literatur eingeführten Begriffes "komplexe Veränderliche" könnte man auch den Begriff "komplexe Schwingungsgröße" verwenden.

Unter dem Begriff "Betrag" einer Polstelle soll der Abstand der Polstelle vom Nullpunkt des Koordinatensystems der komplexen Veränderlichen verstanden werden.

**Patentansprüche**

1. Regelungs-Anordnung zur Regelung des Antriebs für ein bewegtes Werkstück oder bewegtes Werkzeug an einer Werkzeugmaschine, bestehend aus linearem Regler (1), linearer Strecke und Rückführzweig,

   wobei der Regler (1) zum Einregeln einer periodischen Führungsgröße (w) auf der imaginären Achse (j$\omega$) oder in der eine Schwingungsdämpfung repräsentierenden linken Hälfte der Koordinatenebene ($\sigma$,j$\omega$) der komplexen Veränderlichen (s) mindestens ein konjugiert komplexes Polstellenpaar aufweist, deren durch ihren Abstand vom Nullpunkt des Koordinatensystems ($\sigma$,j$\omega$) definierter Betrag gleich oder annähernd gleich der Periodenfrequenz der Führungsgröße (w) ist,
   wobei der Regler (1) bei nicht-sinusförmiger Führungsgröße (w) auf der imaginären Achse (j$\omega$) oder in der linken Hälfte der Koordinatenebene ($\sigma$,j$\omega$) der komplexen Veränderlichen (s) weitere konjugiert komplexe Polstellenpaare aufweist, deren durch ihren Abstand vom Nullpunkt des Koordinatensystems ($\sigma$,j$\omega$) definierter Betrag gleich oder annähernd gleich der Periodenfrequenz der entsprechenden Harmonischen der Führungsgröße (w) ist,
   und wobei der Regler (34) zur Realisierung eines Kammfilter-Verhaltens aus einer Mitkopplungs-Schaltung (36) mit einem im Mitkopplungszweig befindlichen Totzeitglied (39) besteht oder eine solche Mitkopplungs-Schaltung enthält, und daß die Verzögerungszeit ($T_v$) des Totzeitgliedes (39) gleich oder annähernd gleich dem Kehrwert der Periodenfrequenz der Führungsgröße (w) ist.

2. Regelungs-Anordnung zur Regelung des Antriebs für ein bewegtes Werkstück oder bewegtes Werkzeug an einer Werkzeugmaschine, bestehend aus linearem Regler (1), linearer Strecke und Rückführzweig,

   wobei zum Ausregeln einer periodischen Störgröße (z) im Rückführzweig für die Regelgröße (x) ein Rückführglied (3) vorgesehen ist, welches auf der imaginären Achse (j$\omega$) oder in der linken Hälfte der Koordinatenebene ($\sigma$,j$\omega$) der komplexen Veränderlichen (s) mindestens ein konjugiert komplexes Polstellenpaar aufweist, deren durch ihren Abstand vom Nullpunkt des Koordinatensystems ($\sigma$,j$\omega$) definierter Betrag gleich oder annähernd gleich der Periodenfrequenz der Störgröße (z) ist,
   wobei das Rücktührglied (3) bei nicht-sinusförmiger Störgröße (z) auf der imaginären Achse (j$\omega$) oder in der linken Hälfte der Koordinatenebene ($\sigma$,j$\omega$) der komplexen Veränderlichen (s) weitere konjugiert komplexe Polstellenpaare aufweist, deren durch ihren Abstand vom Nullpunkt des Koordinatensystems (σ,jω) definierter Betrag gleich oder annähernd gleich der Perioden frequenz der entsprechenden Harmonischen der Störgröße (z) ist,

und wobei das Rückführglied (3) zur Realisierung eines Kammfilter-Verhaltens aus einer Mitkopplungs-Schaltung (36) mit einem im Mitkopplungszweig befindlichen Totzeitglied (39) bestehen/besteht oder eine solche Mitkopplungs-Schaltung enthalten/enthält, und daß die Verzögerungszeit ($T_v$) des Totzeitgliedes (39) gleich oder annähernd gleich dem Kehrwert der Perioden frequenz der Störgröße (z) ist.

3. Regelungs-Anordnung zur Regelung des Antriebs für ein bewegtes Werkstück oder bewegtes Werkzeug an einer Werkzeugmaschine, bestehend aus linearem Regler (1), linearer Strecke und Rückführzweig,

wobei der Regler (1) zum Ausregeln einer periodischen Störgröße (z) auf der imaginären Achse (jω) oder in der linken Hälfte der Koordinatenebene (σ,jω) der komplexen Veränderlichen (s) mindestens ein konjugiert komplexes Polstellenpaar aufweist, deren durch ihren Abstand vom Nullpunkt des Koordinatensystems (σ,jω) definierter Betrag gleich oder annähernd gleich der Periodenfrequenz der Störgröße (z) ist, wobei der Regler (1) bei nicht-sinusförmiger Störgröße (z) auf der imaginären Achse (jω) oder in der linken Hälfte der Koordinatenebene (σ, jω) der komplexen Veränderlichen (s) weitere konjugiert komplexe Polstellenpaare aufweist, deren durch ihren Abstand vom Nullpunkt des Koordinatensystems (σ, jw) definierter Betrag gleich oder annähernd gleich der Periodenfrequenz der entsprechenden Harmonischen der Störgröße (z) ist, und wobei der Regler (34) zur Realisierung eines Kammfilter-Verhaltens aus einer Mitkopplungs-Schaltung (36) mit einem im Mitkopplungszweig befindlichen Totzeitglied (39) bestehen/besteht oder eine solche Mitkopplungs-Schaltung enthalten/enthält, und daß die Verzögerungszeit ($T_v$) des Totzeitgliedes (39) gleich oder annähernd gleich dem Kehrwert der Periodenfrequenz der Störgröße (z) ist.

4. Regelungs-Anordnung nach einem der Ansprüche 1 bis 3,
**dadurch gekennzeichnet**,
daß die Mitkopplungs-Schaltung (36) einen Addierer (37) aufweist, dem das Eingangssignal (e) für die Mitkopplungs-Schaltung (36) zugeführt ist und der außerdem mit dem Ausgang des Mitkopplungszweiges verbunden ist, und daß der Ausgang des Addierers (37) mit dem Eingang des Mitkopplungszweiges verbunden ist.

5. Regelungs-Anordnung nach Anspruch 4,
**dadurch gekennzeichnet**,
daß im Mitkopplungszweig mit dem Totzeitglied (39) ein Verstärkungsglied (38) in Serie geschaltet ist.

6. Regelungs-Anordnung nach einem der Ansprüche 1 bis 5,
**dadurch gekennzeichnet**,
daß die Mitkopplungs-Schaltung mit einem weiteren Verstärkungsglied (40) in Serie geschaltet ist, und daß der vorstehend erwähnten Serienschaltung aus Mitkopplungs-Schaltung und dem weiteren Verstärkungsglied (40) ein weiterer Addierer (41) nachgeschaltet ist, dem neben dem Ausgangssignal der vorstehend erwähnten Serienschaltung das Eingangssignal (e) für die Mitkopplungs-Schaltung zugeführt ist.

7. Regelungs-Anordnung nach einem der Ansprüche 1 bis 6,
**dadurch gekennzeichnet,**
daß das Totzeitglied (39) von einer um ihre Achse drehbaren Kreisscheibe (56) aus magnetisierbarem Material sowie einem mit dem Scheibenrand korrespondierenden Schreibkopf (57) und einem ebenfalls mit dem Scheibenrand korrespondierenden und in Drehrichtung der Scheibe (56) hinter dem Schreibkopf (57) angeordneten Lesekopf (58) gebildet ist.

8. Verwendung einer Regelungs-Anordnung nach einem der Ansprüche 1 bis 7 zum Antrieb eines Werkzahnrades bzw. eines Werkzeuges bei einer in kontinuierlichem oder diskontinuierlichem Abwälzverfahren arbeitenden Zahnradbearbeitungsmaschine oder des zu schleifenden Schabrades bei einer diskontinuierlich arbeitenden Schabradschleifmachine.

**Claims**

1. A control arrangement for controlling the drive means for a moving workpiece or a moving tool of a machine tool, comprising linear controller (1), linear system and feedback path, wherein for the adjustment of a periodic reference variable (w), on the imaginary axis (jω) or in the left half of the coordinate plane (σ, jω) of the complex variable (s) representing a vibration damping the controller (1) has at least one conjugate-complex pair of pole positions whose value, defined by their distance from the zero point of the coordinate system (σ, jω), is equal or approximately equal to the periodic frequency of the reference variable (w), wherein in the case of a non-sinusoidal reference variable (w), on the imaginary axis (jω) or in the left half of the coordinate plane (σ, jω) of the complex variable (s) the controller (1) has further conjugate-complex pairs of pole positions whose value, defined by their distance from the zero point of the coordinate system (σ, jω), is equal or approximately equal to the periodic frequency of the corresponding harmonics of the reference variable (w), and wherein in order to obtain a comb filter characteristic the controller (34) consists of a positive feedback circuit (36) with a dead-time element (39) arranged in the positive feedback path or contains such a positive feedback circuit, and that the delay time ($T_v$) of the dead-time element (39) is equal or approximately equal to the inverse value of the periodic frequency of the reference variable (w).

2.  A control arrangement for controlling the drive means for a moving workpiece or a moving tool of a machine tool, comprising linear controller (1), linear system and feedback path wherein, for the stabilisation of a periodic disturbance variable (z), in the feedback path for the controlled variable (x) there is arranged a feedback element (3) which, on the imaginary axis (jω) or in the left half of the coordinate plane (σ, jω) of the complex variable (s) has at least one conjugate-complex pair of pole positions whose value, defined by their distance from the zero point of the coordinate system (σ, jω), is equal or approximately equal to the periodic frequency of the disturbance variable (z), wherein, in the case of a non-sinusoidal disturbance variable (z), on the imaginary axis (jω) or in the left half of the coordinate plane (σ, jω) of the complex variable (s) the feedback element (3) has further conjugate-complex pairs of pole positions whose value, defined by their distance from the zero point of the coordinate system (σ, jω), is equal or approximately equal to the periodic frequency of the corresponding harmonic of the disturbance variable (z), and wherein in order to obtain a comb filter characteristic the feedback element (3) consists of a positive feedback circuit (36) with a dead-time element (39) arranged in the positive feedback path or contains such a positive feedback circuit and that the delay time ($T_v$) of the dead-time element (39) is equal or approximately equal to the inverse value of the periodic frequency of the disturbance variable (z).

3.  A control arrangement for controlling the drive means for a moving workpiece or a moving tool of a machine tool comprising linear controller (1), linear system and feedback path wherein, for the stabilisation of a periodic disturbance variable (z), on the imaginary axis (jω) or in the left half of the coordinate system (σ, jω) of the complex variable (s) the controller (1) has at least one conjugate complex pair of pole positions whose value, defined by their distance from the zero point of the coordinate system (σ, jω), is equal or approximately equal to the periodic frequency of the disturbance variable (z), wherein, in the case of a non-sinusoidal disturbance variable (z), on the imaginary axis (jω) or in the left half of the coordinate plane (σ, jω) of the complex variable (s) the controller (1) has further conjugate-complex pairs of pole positions whose value, defined by their distance from the zero point of the coordinate system (σ, jω), is equal or approximately equal to the periodic frequency of the corresponding harmonic of the disturbance variable (z), and wherein in order to obtain a comb filter characteristic the controller (34) consists of a positive feedback circuit (36) with a dead-time element (39) arranged in the positive feedback arm or contains such a positive feedback circuit, and that the delay time ($T_v$) of the dead-time element (39) is equal or approximately equal to the inverse value of the periodic frequency of the disturbance variable (z).

4.  A control arrangement according to one of Claims 1 to 3, characterised in that the positive feedback circuit (36) comprises an adder (37) which is supplied with the input signal (e) for the positive feedback circuit (36) and which is also connected to the output of the positive feedback path, and that the output of the adder (37) is connected to the input of the positive feedback path.

5.  A control arrangement according to Claim 4, characterised in that in the positive feedback path an amplifier element (38) is connected in series with the dead-time element (39).

6.  A control arrangement according to one of Claims 1 to 5, characterised in that the positive feedback circuit is connected in series with a further amplifier element (40) and that downstream of the aforementioned series arrangement of the positive feedback circuit and the further amplifier element (40) there is arranged a further adder (41) which is supplied not only with the output signal of the aforementioned series arrangement but also with the input signal (e) for the positive feedback circuit.

7.  A control arrangement according to one of Claims 1 to 6, characterised in that the dead-time element (39) is formed by a circular disc (56) of magnetisable material rotatable about its axis and by a write head (57) which corresponds to the disc edge and a read head (58) which likewise corresponds to the disc edge and is arranged downstream of the write head (57) in the direction of rotation of the disc (56).

8.  The use of a control arrangement according to one of Claims 1 to 7 for driving a gear wheel and a tool in a gear wheel processing machine operating in a continuous or discontinuous hobbing process or the rotary shave cutter to be ground in a discontinuously operating rotary shave cutter grinding machine.

**Revendications**

1.  Système de régulation pour réguler l'entraînement d'une pièce en mouvement ou d'un outil en mouvement sur une machine-outil, comprenant un régulateur (1) linéaire, un système à réguler et une branche de rétroaction,

    le régulateur (1) présentant, pour régler une grandeur de consigne (w) périodique sur l'axe imaginaire ($j\omega$) ou dans la moitié gauche du plan de coordonnées ($\sigma,j\omega$) de la variable (s) complexe représentant un amortissement d'oscillation, au moins une paire de positions de pôles complexes conjuguées dont la valeur, laquelle est définie par leur distance par rapport au zéro du système de coordonnées ($\sigma,j\omega$), est égale ou sensiblement égale à la fréquence de la grandeur de consigne (w),
    le régulateur (1) présentant, pour une grandeur de consigne (w) non sinusoïdale, sur l'axe imaginaire ($j\omega$) ou dans la moitié gauche du plan de coordonnées ($\sigma,j\omega$) de la variable (s) complexe représentant un amortissement d'oscillation, des paires de positions de pôles complexes conjuguées supplémentaires dont la valeur, laquelle est définie par leur distance par rapport au zéro du système de coordonnées ($\sigma,j\omega$), est égale ou sensiblement égale à la fréquence des harmoniques concernées de la grandeur de consigne (w),
    et le régulateur (34), pour obtenir un comportement de filtre peigne, étant formé d'un circuit de rétroaction (36) avec un élément à retard (39) placé dans la branche de rétroaction ou comportant un tel circuit de rétroaction et le retard ($T_v$) de l'élément à retard (39) étant égal ou sensiblement égal à la valeur inverse de la fréquence de la grandeur de consigne (w).

2.  Système de régulation pour réguler l'entraînement d'une pièce en mouvement ou d'un outil en mouvement sur une machine-outil, comprenant un régulateur (1) linéaire, un système à réguler et une branche de rétroaction,

    pour éliminer une grandeur perturbatrice (z) périodique, un élément de rétroaction (3) étant prévu dans la branche de rétroaction pour la grandeur réglée (x), lequel élément de rétroaction présente sur l'axe imaginaire ($j\omega$) ou dans la moitié gauche du plan de coordonnées ($\sigma,j\omega$) de la variable (s) complexe, au moins une paire de positions de pôles complexes conjuguées dont la valeur, laquelle est définie par leur distance par rapport au zéro du système de coordonnées ($\sigma,j\omega$), est égale ou sensiblement égale à la fréquence de la grandeur perturbatrice (z),
    l'élément de rétroaction (3) présentant, pour une grandeur perturbatrice (z) non sinusoïdale, sur l'axe imaginaire ($j\omega$) ou dans la moitié gauche du plan de coordonnées ($\sigma,j\omega$) de la variable (s) complexe, des paires de positions de pôles complexes conjuguées supplémentaires dont la valeur, laquelle est définie par leur distance par rapport au zéro du système de coordonnées ($\sigma,j\omega$), est égale ou sensiblement égale à la fréquence des harmoniques concernées de la grandeur perturbatrice (z),
    et l'élément de rétroaction (3), pour obtenir un comportement de filtre peigne, étant formé d'un circuit de rétroaction (36) avec un élément à retard (39) placé dans la branche de rétroaction ou comportant un tel circuit de rétroaction et le retard ($T_v$) de l'élément à retard (39) étant égal ou sensiblement égal à la valeur inverse de la fréquence de la grandeur de consigne (z).

3.  Système de régulation pour réguler l'entraînement d'une pièce en mouvement ou d'un outil en mouvement sur une machine-outil, comprenant un régulateur (1) linéaire, un système à réguler et une branche de rétroaction,

    le régulateur (1) présentant, pour éliminer une grandeur perturbatrice (z) périodique, sur l'axe imaginaire ($j\omega$) ou dans la moitié gauche du plan de coordonnées ($\sigma,j\omega$) de de la variable (s) complexe, au moins une paire de positions de pôles complexes conjuguées dont la valeur, laquelle est définie par leur distance par rapport au zéro du système de coordonnées ($\sigma,j\omega$), est égale ou sensiblement égale à la fréquence de la grandeur perturbatrice (z),
    le régulateur (1) présentant, pour une grandeur perturbatrice (z) non sinusoïdale, sur l'axe imaginaire ($j\omega$) ou dans la moitié gauche du plan de coordonnées ($\sigma,j\omega$) de la variable (s) complexe, des paires de positions de pôles complexes conjuguées supplémentaires dont la valeur, laquelle est définie par leur distance par rapport au zéro du système de coordonnées ($\sigma,j\omega$), est égale ou sensiblement égale à la fréquence des harmoniques concernées de la grandeur perturbatrice (z),

et le régulateur (34), pour obtenir un comportement de filtre peigne, étant formé d'un circuit de rétroaction (36) avec un élément à retard (39) placé dans la branche de rétroaction ou comportant un tel circuit de rétroaction et le retard ($T_v$) de l'élément à retard (39) étant égal ou sensiblement égal à la valeur inverse de la fréquence de la grandeur de consigne (z).

4. Système de régulation selon l'une des revendications 1 à 3, caractérisé par le fait que circuit de rétroaction (36) comporte un additionneur (37) auquel est transmis le signal d'entrée (e) pour le circuit de rétroaction (36) et qui est en outre connecté à la sortie de la branche de rétroaction et par le fait que la sortie de l'additionneur (37 est connectée à l'entrée de la branche de rétroaction.

5. Système de régulation selon la revendication 4, caractérisé par le fait qu'un élément amplificateur (38) est connecté en série avec l'élément à retard (39) dans la branche de rétroaction.

6. Système de régulation selon l'une des revendications 1 à 5, caractérisé par le fait que le circuit de rétroaction (36) est connecté en série avec un élément amplificateur (40) supplémentaire et par le fait qu'un additionneur (41) supplémentaire est connecté à la suite du circuit série mentionné plus haut, formé du circuit de rétroaction et de l'élément amplificateur (40) supplémentaire, lequel additionneur reçoit outre le signal de sortie du circuit série mentionné plus haut, le signal d'entrée (e) pour le circuit de rétroaction.

7. Système de régulation selon l'une des revendications 1 à 6, caractérisé par le fait que l'élément à retard (39) est formé d'un disque (56) en un matériau magnétisable tournant autour de son axe et d'une tête d'écriture (57) alignée sur le bord du disque ainsi que d'une tête de lecture (58) également alignée sur le bord du disque qui est disposée derrière la tête d'écriture dans la direction de rotation du disque (56).

8. Utilisation d'un système de régulation selon l'une des revendications 1 à 7 pour l'entraînement d'une roue dentée ou d'un outil dans une machine à tailler les engrenages travaillant selon le principe à division et génération continue ou selon le principe à division intermittente ou pour l'entraînement d'une broche circulaire devant être affûtée sur une machine à affûter les broches circulaires à division intermittente.

FIG. 1

FIG. 2

FIG. 3a

FIG. 3b

FIG. 4a

FIG. 4b

FIG. 5

s-Ebene

Betrag

Betrag

FIG. 6a

FIG. 6b

FIG. 7

s-Ebene

Betrag

Betrag

16

FIG. 8

FIG. 9

# FIG. 10

# FIG. 11

```
            e(t)    ┌──────────────┐   a(t)   ┌──────────────┐   u(t)
         ──────────▶│ Kammfilter-  │─────────▶│  Restregler  │─────────▶
                    │   Regler     │          │   G_RR(s)    │
                    │   G_KF(s)    │          │              │
                    └──────────────┘          └──────────────┘
                           34                        35
                                    1
```

# FIG. 12

```
                    ┌──────┐      ┌──────┐
                    │  K₁  │◀─────│  T_v │
                    │      │      │      │
                    └──────┘      └──────┘
                       38            39
   e(t)                                          ┌──────┐   a(t)
 ──────────▶    ⊕(+)────────────────────────────▶│  K₂  │──▶⊕(+)──▶
                37                                │      │    41
                                                  └──────┘
                                                     40
                                          36
                                          34
```

$K_1$ $T_v$ $K_2$

## FIG. 13

## FIG. 14

s-Ebene

## FIG. 15

## FIG. 16

s-Ebene

## FIG. 17

## FIG. 18

# FIG. 19

EP 0 576 661 B1